# EUROPEAN PATENT SPECIFICATION

(11) **EP 4 390 990 B1**
(45) Date of publication and mention of the grant of the patent: **09.12.2026**
(21) Application number: 23171345.4
(22) Date of filing: 03.05.2023
(51) Int. Cl.: H01G 4/12, C04B 35/468, H01G 4/224, H01G 4/30, C04B 35/465

(54) **MULTILAYER ELECTRONIC COMPONENT**
MEHRSCHICHTIGES ELEKTRONISCHES BAUTEIL
COMPOSANT ÉLECTRONIQUE MULTICOUCHE

(30) Priority: 23.12.2022 KR 20220182444
(43) Date of publication of application: 26.06.2024
(73) Proprietor: Samsung Electro-Mechanics Co., Ltd., Suwon-si, Gyeonggi-do (KR)
(72) Inventor: Kim, Kyung Sik, Suwon-si (KR); Baik, Seung In, Suwon-si (KR); Lee, Jong Hwan, Suwon-si (KR); Choi, Min Young, Suwon-si (KR)
(74) Representative: Grünecker Patent- und Rechtsanwälte PartG mbB

(56) References cited:
- WO-A1-2016/007255
- KR-A- 20200 095 443
- US-A1- 2013 119 827
- US-A1- 2021 118 617

## Description

### CROSS-REFERENCE TO RELATED APPLICATION(S)

This application claims benefit of priority to Korean Patent Application No. 10-2022-0182444 filed on December 23, 2022 in the Korean Intellectual Property Office.

### TECHNICAL FIELD

The present disclosure relates to a multilayer electronic component.

A multilayer ceramic capacitor (MLCC), a multilayer electronic component, may be a chip-type condenser mounted on the printed circuit boards of any of various electronic products, such as an image display device, including a liquid crystal display (LCD) or a plasma display panel (PDP), a computer, a smartphone, or a mobile phone, serving to charge or discharge electricity therein or therefrom.

The multilayer ceramic capacitor has a small size, implements high capacitance, and is easily mounted, and may thus be used as a component of various electronic devices. There has been increasing demand for a multilayer ceramic capacitor to have a reduced size and higher capacitance as each of various electronic devices such as a computer, a mobile device, and the like have a reduced size and higher output.

A multilayer ceramic capacitor may generally include a body in which a dielectric layer and an internal electrode are alternately disposed, and a side margin portion disposed on a side surface of the body to protect the body.

Meanwhile, recently, in order to achieve a reduced size and higher capacitance of a multilayer ceramic capacitor, a dielectric layer and an internal electrode are being thinned. As a thickness of the dielectric layer becomes thinner, the dielectric layer becomes vulnerable to deterioration of insulation resistance, and accordingly, a breakdown in withstand voltage of the multilayer ceramic capacitor destruction may occur.

Since such a breakdown in withstand voltage tends to occur at an end of the side margin portion, a new method for securing reliability of the multilayer ceramic capacitor by changing a material added to the side margin portion, or a structure, compared to the dielectric layer of the multilayer ceramic capacitor, is needed.

KR 2020 0095443 A discloses a multi-layered ceramic capacitor comprising: a ceramic body including a dielectric layer, a first internal electrode and a second internal electrode facing each other with the dielectric layer interposed therebetween, a first surface and a second surface facing each other, a third surface and a fourth surface for connecting the first surface and the second surface and facing each other, and a fifth surface and a sixth surface for connecting the first to fourth surfaces and facing each other; and first and second external electrodes disposed outside the ceramic body, and electrically connected to the first and second internal electrodes respectively. The ceramic body includes: an active unit including the first internal electrode and the second internal electrode disposed to face each other with the dielectric layer interposed therebetween to form a capacitance; a cover unit formed above and below the active unit; and a margin unit disposed on a side surface of the active unit. The dielectric layer of the active unit, the cover unit, and the margin unit include magnesium (Mg), and the content of the included magnesium (Mg) is greater than 0 to 1.0 mol with respect to titanium (Ti) included in the dielectric layer of the active unit, the cover unit, and the margin unit.

US 2021/118617 A1 discloses a multilayer ceramic capacitor that includes: a multilayer structure in which each of a plurality of dielectric layers and each of a plurality of internal electrode layers are alternately stacked. A ceramic protection section includes a cover layer and a side margin. A main component ceramic of the ceramic protection section is a ceramic material having a perovskite structure expressed as a general formula ABO3. An A site of the perovskite structure includes at least Ba. A B site of the perovskite structure includes at least Ti and Zr. A Zr/Ti ratio which is a molar ratio of Zr and Ti is 0.010 or more and 0.25 or less. An A/B ratio which is a molar ratio of the A site and the B site is 0.990 or less.

US 2013/119827 A1 discloses a dielectric composition, including; a base powder including BamTiO3; a first sub-component including 0.05 to 4.00 moles of an oxide or carbonate containing at least one rare-earth element based on 100 moles of the base powder; a second sub-component including 0.05 to 0.70 moles of an oxide or carbonate containing at least one transition metal; a third sub-component including 0.20 to 2.00 moles of a Si oxide; a fourth sub-component including 0.02 to 1.00 mole of an Al oxide; and a fifth sub-component including 20 to 140% of an oxide containing at least one of Ba and Ca, based on the third sub-component.

WO 2016/007255 A1 discloses LTCC devices that are produced from dielectric compositions comprising a mixture of precursor materials that, upon firing, forms a dielectric material comprising a matrix of titanates of alkaline earth metals. The matrix is doped with at least one selected from rare- earth element, aluminum oxide, silicon oxide and bismuth oxide.

### SUMMARY

The invention provides a multilayer electronic component according to claim 1. Embodiments of the invention are set forth with the dependent claims.

An aspect of the present disclosure is to improve reliability of a multilayer electronic component.

An aspect of the present disclosure is to reduce a dissipation factor (DF) and an effective capacitance change rate of a multilayer electronic component.

However, the object of the present disclosure is not limited to the above, and will be more easily understood in the process of describing specific embodiments of the present disclosure.

According to an aspect of the present disclosure, a multilayer electronic component includes a body including a dielectric layer and first and second internal electrodes alternately disposed in a first direction with the dielectric layer interposed therebetween, and having first and second surfaces opposing each other in the first direction, third and fourth surfaces opposing each other in a second direction and connected to the first and second surfaces, and fifth and sixth surfaces opposing each other in a third direction and connected to the first to fourth surfaces; side margin portions disposed on the fifth and sixth surfaces; and external electrodes disposed on the third and fourth surfaces, wherein at least of one the side margin portions includes BaTiO₃, Zn, and Zr, an amount of Zn and an amount of Zr in the at least of one the side margin portions are 0.5 mol or more and 1.0 mol or less, relative to 100 mol of Ti included in the at least of one the side margin portions, respectively, and the amount of Zn in the at least of one the side margin portions is different from an amount of Zn in the dielectric layer, and the amount of Zr in the at least of one the side margin portions is different from an amount of Zr in the dielectric layer.

According to an aspect of the present disclosure, a multilayer electronic component includes a body including a dielectric layer and first and second internal electrodes alternately disposed in a first direction with the dielectric layer interposed therebetween, and having first and second surfaces opposing each other in the first direction, third and fourth surfaces opposing each other in a second direction and connected to the first and second surfaces, and fifth and sixth surfaces opposing each other in a third direction and connected to the first to fourth surfaces; side margin portions disposed on the fifth and sixth surfaces; and external electrodes disposed on the third and fourth surfaces, wherein at least one of the side margin portions includes BaTiO₃, Zn, and Zr, an amount of Zn in the at least one of the side margin portions is more than an amount of Zn in the dielectric layer, and an amount of Zr in the at least one of the side margin portions is more than an amount of Zr in the dielectric layer.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an embodiment of the present disclosure.
FIG. 2 is an exploded perspective view schematically illustrating the body and the side margin portion as shown in FIG. 1.
FIG. 3 is a cross-sectional view taken along line I-I' and schematically illustrating the embodiment of FIG. 1,.
FIG. 4 is a cross-sectional view taken along line II-II' and schematically illustrating the embodiment of FIG. 1.
FIG. 5 is an enlarged view of region K1 as shown in FIG. 4.
FIG. 6 is an enlarged view of region K2 as shown in FIG. 4.
FIGS. 7A to 9 are images of side margin portions of each test number, taken with a scanning electron microscope (SEM).

### DETAILED DESCRIPTION

Hereinafter, embodiments of the present disclosure will be described with reference to specific example embodiments and the attached drawings. The embodiments of the present disclosure may, however, be exemplified in many different forms and should not be construed as being limited to the specific embodiments set forth herein. The example embodiments disclosed herein are provided for those skilled in the art to better explain the present disclosure. In the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

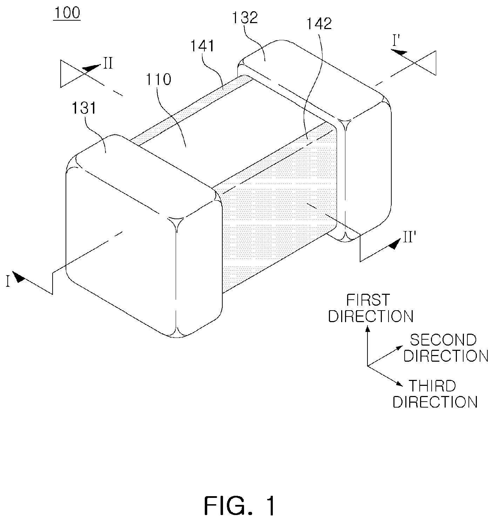

FIG. 1 is a perspective view schematically illustrating a multilayer electronic component according to an embodiment of the present disclosure.

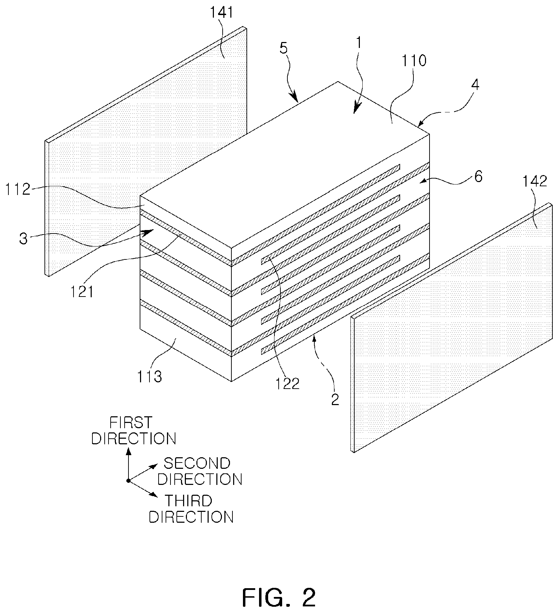

FIG. 2 is an exploded perspective view schematically illustrating the body and the side margin portion of FIG. 1.

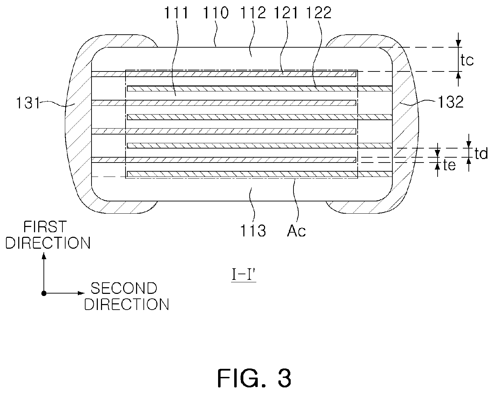

FIG. 3 is a cross-sectional view schematically illustrating FIG. 1, taken along line I-I'.

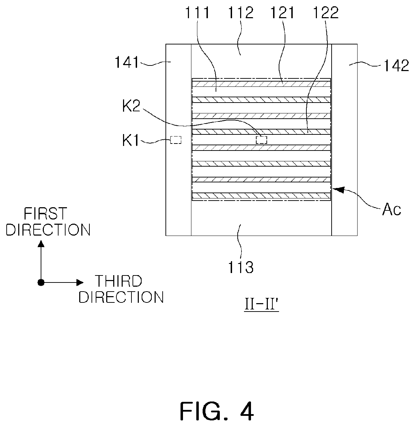

FIG. 4 is a cross-sectional view schematically illustrating FIG. 1, taken along line II-II'.

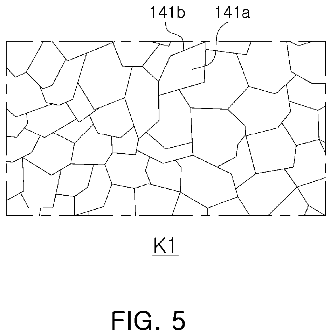

FIG. 5 is an enlarged view of region K1 of FIG. 4.

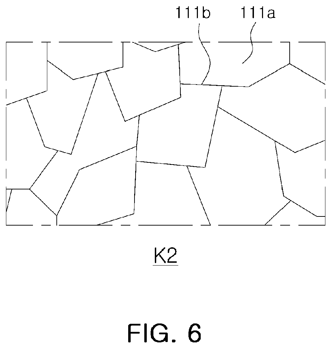

FIG. 6 is an enlarged view of region K2 of FIG. 4.

Referring to FIGS. 1 to 6, a multilayer electronic component 100 according to an embodiment of the present disclosure may include a body 110 including a dielectric layer 111 and first and second internal electrodes 121 and 122 alternately disposed in a first direction with the dielectric layer interposed therebetween, and having first and second surfaces 1 and 2 opposing in the first direction, third and fourth surfaces 3 and 4 connected to the first and second surfaces and opposing in a second direction, and fifth and sixth surfaces 5 and 6 connected to the first to fourth surfaces and opposing in a third direction; side margin portions 141 and 142 disposed on the fifth and sixth surfaces; and external electrodes 131 and 132 disposed on the third and fourth surfaces, wherein at least of one the side margin portions includes BaTiO₃, Zn, and Zr, an amount of Zn and an amount of Zr in at least of one the side margin portions are 0.5 mol or more and 1.0 mol or less, relative to 100 mol of Ti included in at least of one the side margin portions, respectively, and the amount of Zn in at least of one the side margin portions is different from an amount of Zn in the dielectric layer, and the amount of Zr in at least of one the side margin portions is different from an amount of Zr in the dielectric layer.

According to an embodiment of the present disclosure, the amount of Zn and the amount of Zr in at least of one the side margin portions 141 and 142 may be 0.5 mol or more and 1.0 mol or less, relative to 100 mol of Ti included in at least of one the side margin portions 141 and 142, respectively, to suppress grain growth of a dielectric grain and induce densification thereof in at least of one the side margin portions 141 and 142, to improve reliability of the multilayer electronic component, and to reduce a dissipation factor (DF) and an effective capacitance change rate under a DC electric field.

Hereinafter, each component included in the multilayer electronic component 100 according to an embodiment of the present disclosure will be described in more detail.

Although the detailed shape of the body 110 is not particularly limited, as illustrated, the body 110 may have a hexahedral shape or a shape similar thereto. Due to shrinkage of ceramic powder particles included in the body 110 or polishing of corners during a sintering process, the body 110 may not have a hexahedral shape with perfect straight lines, but may substantially have a hexahedral shape.

The body 110 may have the first and second surfaces 1 and 2 opposing in the first direction, the third and fourth surfaces 3 and 4 connected to the first and second surfaces 1 and 2 and opposing in the second direction, and the fifth and sixth surfaces 5 and 6 connected to the first to fourth surfaces 1, 2, 3 and 4 and opposing in the third direction.

In the body 110, the dielectric layer 111 and internal electrodes 121 and 122 may be alternately stacked. A plurality of dielectric layers 111 forming the body 110 may be in a sintered state, and a boundary between adjacent dielectric layers 111 may be integrated to the extent that it is difficult to confirm without using a scanning electron microscope (SEM).

The dielectric layer 111 may include a plurality of dielectric grains 111a and grain boundaries 111b disposed between adjacent dielectric grains. The material constituting the dielectric layer 111 is not particularly limited as long as sufficient capacitance is obtained, and may include, for example, barium titanate (BaTiO₃).

The dielectric layer 111 may be formed by preparing a ceramic slurry containing ceramic powder such as barium titanate (BaTiO₃) or the like, an organic solvent and a binder, coating and drying the slurry on a carrier film to prepare a ceramic green sheet, and then sintering the ceramic green sheet.

An average thickness td of the dielectric layer 111 does not need to be particularly limited. In general, as a thickness of the dielectric layer 111 decreases, there may be a problem in that moisture resistance reliability and high temperature reliability of the multilayer electronic component deteriorate. In a multilayer electronic component according to an embodiment of the present disclosure, an amount of Zn and an amount of Zr in at least of one the side margin portions 141 and 142 satisfy 0.5 mol or more and 1.0 mol or less, relative to 100 mol of Ti included in at least of one the side margin portions, respectively. Therefore, even when the average thickness td of the dielectric layer 111 is 0.4 µm or less, reliability of the multilayer electronic component may be secured.

In this case, the average thickness td of the dielectric layer 111 means a size of the dielectric layer 111 disposed between the internal electrodes 121 and 122 in the first direction. The average thickness of the dielectric layer 111 may be measured by scanning a plane of the body 110 in the first and second directions with a scanning electron microscope (SEM) at a magnification of 10,000. More specifically, the average thickness of the dielectric layer may be acquired by measuring thicknesses at a plurality of points of a dielectric layer 111, for example, at thirty points being located at equal intervals in the second direction. The thirty points located at equal intervals may be determined on a capacitance formation portion Ac to be described later. In addition, in a case in which the measurement of an average value is executed with respect to 10 dielectric layers, the average thickness of the dielectric layers 111 may be more generalized. Other methods and/or tools appreciated by one of ordinary skill in the art, even if not described in the present disclosure, may also be used.

The internal electrodes 121 and 122 may be alternately disposed, together with the dielectric layer 111. For example, a first internal electrode 121 and a second internal electrode 122, which may be a pair of electrodes having different polarities, may be arranged to oppose each other, with the dielectric layer 111 interposed therebetween. The first internal electrode 121 and the second internal electrode 122 may be electrically separated from each other by the dielectric layer 111 disposed therebetween.

The first internal electrode 121 may be connected to the third, fifth, and sixth surfaces, and the second internal electrode 122 may be connected to the fourth, fifth, and sixth surfaces. Also, the first internal electrode 121 may be disposed to be spaced apart from the fourth surface, and the second internal electrode 122 may be disposed to be separated from the third surface.

A conductive metal included in the internal electrodes 121 and 122 may include one or more of nickel (Ni), copper (Cu), palladium (Pd), silver (Ag), gold (Au), platinum (Pt), tin (Sn), tungsten (W), titanium (Ti), and alloys thereof, but the present disclosure is not limited thereto.

The internal electrodes 121 and 122 may be formed by applying a conductive paste for internal electrodes containing a conductive metal by a predetermined thickness on a ceramic green sheet, and sintering the same. As a method of printing the conductive paste for internal electrodes, a screen printing method, a gravure printing method, or the like may be used, but the present disclosure is not limited thereto.

Average thicknesses te of the internal electrodes 121 and 122 do not need to be particularly limited. In a multilayer electronic component according to an embodiment of the present disclosure, an amount of Zn and an amount of Zr in at least one of the side margin portions 141 and 142 satisfy 0.5 mol or more and 1.0 mol or less, relative to 100 mol of Ti included in at least one of the side margin portions, respectively. Therefore, even when the average thickness te of the internal electrodes 121 and 122 is 0.4 µm or less, reliability of the multilayer electronic component may be secured.

The average thickness te of the internal electrodes 121 and 122 means a size of the internal electrodes 121 and 122 in the first direction. In this case, the average thickness of the internal electrodes 121 and 122 may be measured by scanning cross-sections of the body 110 in the first and second directions with a scanning electron microscope (SEM) at a magnification of 10,000. More specifically, the average thickness of the internal electrodes 121 and 122 may be acquired by measuring thicknesses at a plurality of points of one internal electrode 121 or 122, for example, at thirty points being located at equal intervals in the second direction. The thirty points at equal intervals may be determined on a capacitance formation portion Ac to be described later. In addition, when in a case in which the measurement of an average value is executed with respect to 10 internal electrodes 121 and 122, the average thickness of the internal electrodes 121 and 122 may be more generalized. Other methods and/or tools appreciated by one of ordinary skill in the art, even if not described in the present disclosure, may also be used.

The body 110 may include a capacitance formation portion Ac disposed in the body 110 and including the first and second internal electrodes 121 and 122 alternately disposed with the dielectric layer 111 interposed therebetween to form capacitance, and a first cover portion 112 and a second cover portion 113, respectively disposed on opposite surfaces of the capacitance formation portion Ac in the first direction. The cover portions 112 and 113 may basically play a role in preventing damage to the internal electrodes due to physical or chemical stress. The cover portions 112 and 113 may have the same structure as the dielectric layer 111, except that they do not include an internal electrode.

Average thicknesses tc of the cover portions 112 and 113 do not need to be particularly limited. The average thickness tc of the cover portions 112 and 113 may be 20 µm or less to reduce a size and increase capacitance of the multilayer electronic component. As described above, In a multilayer electronic component according to an embodiment of the present disclosure, an amount of Zn and an amount of Zr in at least one of the side margin portions 141 and 142 satisfy 0.5 mol or more and 1.0 mol or less, relative to 100 mol of Ti included in at least one of the side margin portions, respectively. Therefore, even when the average thickness of the cover portions 112 and 113 is 20 µm or less, reliability of the multilayer electronic component may be secured.

In this case, the average thickness of the cover portions 112 and 113 means an average thickness of the first cover portion 112 and an average thickness of the second cover portion 113, respectively. In addition, the average thickness of the cover portions 112 and 113 may refer to the average size of the cover portions 112 and 113 in the first direction, and may be an average value of sizes in the first direction, measured at five equally spaced points in a plane of the body 110 in the first and second directions.

According to an embodiment of the present disclosure, the side margin portions 141 and 142 disposed on the fifth and sixth surfaces may be included. Specifically, the side margin portions 141 and 142 may include a first side margin portion 141 disposed on the fifth surface, and a second side margin portion 142 disposed on the sixth surface. The side margin portions 141 and 142 may include a plurality of dielectric grains 141a, and a grain boundary 141b disposed between adjacent dielectric grains, and the side margin portions may basically play a role in preventing damage to the internal electrodes 121 and 122 due to physical or chemical stress.

At least one of the side margin portions 141 and 142 may include BaTiO₃, Zn, and Zr. The side margin portions 141 and 142 may include BaTiO₃ as a main component, Zn may exist as ZnO, which is an oxide form of Zn, and Zr may exist as ZrO₂, which is an oxide form of Zr, but the present disclosure is not limited thereto.

BaTiO₃ may be a representative perovskite oxide having a structure represented by ABO₃. Since a Zn ion has a valence of +2, it may be considered that the Zn ion is substituted at a Ba site having a valence of +2, i.e., an A site. In this case, because of a mismatch in size between Ba having a relative large ion size and Zn, solid dissolution limitation may be very low. In addition, it may be considered that the Zn ion is substituted into the B site in the ABO₃ structure due to a relative small size thereof. In this case, Zn may have a lower valence than Ti, and may be thus difficult to actually be dissolved into the B site. Therefore, most of Zn may not be dissolved into the dielectric grains 141a of the side margin portions, and may be segregated at the grain boundary 141b of the side margin portions. Zn segregated on the grain boundary in this manner may induce a drag effect that hinders movement of the grain boundary during grain growth of the dielectric grain, and thus may play a role in suppressing the grain growth of the dielectric grains included in the side margin portions. In addition, a Zn oxide may be known as a representative low-temperature sintering aid because of a low melting point thereof. Such a Zn oxide may induce liquid phase sintering of the side margin portions 141 and 142 during sintering, to improve densities of the side margin portions.

In addition, the Zr ion may have a +4 valent ion, in a similar manner to Ti, but may be difficult to be dissolved into the B site due to a large difference in ion size. Therefore, most of the Zr may not be dissolved into the dielectric grains 141a of the side margin portion, but may be segregated at the grain boundary 141b of the side margin portion, and the Zr segregated at the grain boundary may suppress grain growth of the dielectric grain included in the side margin portion, and may improve density of the side margin portion.

In this case, occurrence of a breakdown in withstand voltage at ends of the side margin portions 141 and 142 may be prevented by grain growth suppressing and densification effects of the dielectric grains included in the side margin portions 141 and 142, to improve reliability of the multilayer electronic component.

In addition, even when sintered at a low temperature, densities of the side margin portions 141 and 142 may be improved. Due to this low temperature sintering effect, a density of a boundary region between the capacitance formation portion Ac and the side margin portions 141 and 142 may be improved to lower DF and an effective capacitance change rate of the multilayer electronic component.

According to an embodiment of the present disclosure, an amount of Zn and an amount of Zr in at least one of the side margin portions 141 and 142 may be 0.5 mol or more and 1.0 mol or less, respectively, relative to 100 mol of Ti included in at least one of the side margin portions 141 and 142. When the amount of Zn and the amount of Zr included in at least one of the side margin portions 141 and 142 are less than 0.5 mol, relative to 100 mol of Ti included in at least one of the side margin portions 141 and 142, respectively, a grain growth suppressing effect of the dielectric grains 141a of the side margin portion due to Zn and Zr may be reduced, and an effect of improving reliability of the multilayer electronic component may be insignificant. In addition, when the amount of Zn and the amount of Zr included in at least one of the side margin portions 141 and 142 are greater than 1.0 mol, relative to 100 mol of Ti included in at least one of the side margin portions 141 and 142, respectively, grain growth of the dielectric grains 141a of at least one of the side margin portions 141 and 142 may be excessively suppressed, a density of the side margin portion may be lowered, and external moisture may penetrate through a pore formed in the side margin portion, to reduce reliability of the multilayer electronic component.

For example, the side margin portions 141 and 142 may be formed by stacking dielectric sheets including BaTiO₃, ZnO, and ZrO₂ on the fifth and sixth surfaces of the body and then sintering them. In addition, an amount of Zn and an amount of Zr in the side margin portions may be determined by adjusting an amount of ZnO and an amount of ZrO₂, added to the dielectric sheets.

According to an embodiment of the present disclosure, an amount of Zn in at least one of the side margin portions 141 and 142 may be different from an amount of Zn in the dielectric layer 111, and an amount of Zr in at least one of the side margin portions 141 and 142 may be different from an amount of Zr in the dielectric layer 111.

For example, Zn and Zr included in the side margin portions 141 and 142 may be added to prevent a breakdown in withstand voltage occurring at ends of the side margin portions 141 and 142, and Zn and Zr, having the same amount, need not be added to the dielectric layer 111. In addition, according to an embodiment of the present disclosure, the side margin portions 141 and 142 may be formed by stacking and sintering separate dielectric sheets on the fifth and sixth surfaces of the body. Therefore, the amount of Zn and the amount of Zr included in the side margin portions 141 and 142 and the amount of Zn and the amount of Zr included in the dielectric layer 111 may be adjusted to be different from each other, without a additional process.

For example, the dielectric layer 111 may not include Zn or may include a smaller amount of Zn than at least one of the side margin portions 141 and 142. In addition, the dielectric layer 111 may not include Zr or may include a smaller amount of Zr than at least one of the side margin portions 141 and 142. As described above, there may be problems that Zn and Zr play a role of suppressing grain growth of dielectric grains, and as sizes of dielectric grains in the dielectric layer decreases, effective capacitance of the multilayer electronic component decreases. Therefore, the dielectric layer 111 may not include Zn and Zr, or may include smaller amounts of Zn and Zr than at least one of the side margin portions 141 and 142, to prevent a deterioration in effective capacitance of the multilayer electronic component, while the amount of Zn and the amount of Zr included in at least one of the side margin portions 141 and 142 satisfy 0.5 mol or more and 1.0 mol or less, relative to 100 mol of Ti included in at least one of the side margin portions 141 and 142, respectively, to further improve reliability of the multilayer electronic component.

In an embodiment, an amount of Zn at the grain boundary 141b of the side margin portion may be larger than an amount of Zn in the dielectric grain 141a, and an amount of Zr at the grain boundary 141b of the side margin portion may be larger than an amount of Zr in the dielectric grain 141a. As described above, most of the Zn and Zr included in the side margin portions may not be dissolved into the dielectric grains 141a of the side margin portions, but may be segregated at the grain boundary 141b of the side margin portions, to induce suppression in grain growth and densification. Therefore, the amounts of Zn and Zr in the grain boundary 141b of the side margin portion may be greater than the amounts of Zn and Zr in the dielectric grain 141a, respectively.

In an embodiment, a multilayer electronic component may satisfy 104nm ≤ A1 ≤ 192nm, where Al is an average size of a dielectric grain 141a included in at least one of the side margin portions 141 and 142. In addition, the multilayer electronic component may satisfy 0.34 ≤ A1/A2 ≤ 0.65, where A2 is an average size of a dielectric grain 111a included in the dielectric layer 111.

The A1 and A2 may be controlled by, for example, an amount of Zn and an amount of Zr included in the side margin portions and the dielectric layer, respectively. In this case, when A1 and A1/A2 satisfy the above conditions, an effect of improving reliability of the multilayer electronic component by suppression of grain growth in the side margin portion may be more remarkable.

The A1 may mean an average value of sizes of dielectric grains, acquired by obtaining an image from a central region (e.g., portion "K1" in FIG. 4) of the side margin portions 141 and 142 with a scanning electron microscope (SEM) at a magnification of 50,000, in a plane of the multilayer electronic component in the first and third directions, cut in a center in the second direction, and then analyzing the image using an image analysis program, for example, Zootos Program by Zootos. Other methods and/or tools appreciated by one of ordinary skill in the art, even if not described in the present disclosure, may also be used.

In addition, the A2 may mean an average value of sizes of dielectric grains, acquired by obtaining an image from a central region (e.g., portion "K2" in FIG. 4) of the dielectric layer 111 with a scanning electron microscope (SEM) at a magnification of 50,000, in a plane of the multilayer electronic component in the first and third directions, cut at a center in the second direction, and then analyzing the image using an image analysis program, for example, Zootos Program by Zootos. Other methods and/or tools appreciated by one of ordinary skill in the art, even if not described in the present disclosure, may also be used.

In an embodiment, at least one of the side margin portions 141 and 142 may contain Dy, and an amount of Dy in at least one of the side margin portions may be 0.5 mol or more and 2.0 mol or less, relative to 100 mol of Ti included in at least one of the side margin portions. The Dy may exist as an oxide or a carbonate of Dy in the side margin portions 141 and 142, but the present disclosure is not limited thereto. The Dy may serve to improve reliability of the multilayer electronic component.

When the amount of Dy in at least one of the side margin portions is less than 0.5 mol, relative to 100 mol of Ti included in at least one of the side margin portions, the aforementioned reliability improvement effect may be insignificant. In addition, when the amount of Dy in at least one of the side margin portions is larger than 2.0 mol, relative to 100 mol of Ti included in at least one of the side margin portions, high-temperature withstand voltage characteristics of the multilayer electronic component may be deteriorated.

In an embodiment, at least one of the side margin portions 141 and 142 may contain Tb, and an amount of Tb in at least one of the side margin portions may be 0.1 mol or more and 0.5 mol or less, relative to 100 mol of Ti included in at least one of the side margin portions. The Tb may exist as an oxide or a carbonate of Tb in the side margin portions 141 and 142, but the present disclosure is not limited thereto. The Tb may serve to improve reliability of the multilayer electronic component by filling pores generated between the side margin portions 141 and 142 and the internal electrodes 121 and 122.

When the amount of Tb in at least one of the side margin portions is less than 0.1 mol, relative to 100 mol of Ti included in at least one of the side margin portions, the aforementioned reliability improvement effect may be insignificant. In addition, when the amount of Tb in at least one of the side margin portions is greater than 0.5 mol, relative to 100 mol of Ti included in at least one of the side margin portions, a decrease in insulation resistance of the dielectric layer 111 may occur.

In an embodiment, at least one of the side margin portions 141 and 142 may contain Si, and an amount of Si in at least one of the side margin portions may be 2.0 mol or more and 5.0 mol or less, relative to 100 mol of Ti included in at least one of the side margin portions. The Si may exist as an oxide or a carbonate of glass or Si in the side margin portions 141 and 142, but the present disclosure is not limited thereto. The Si may serve to improve high-temperature withstand voltage characteristics of multilayer electronic components.

When the amount of Si in at least one of the side margin portions is less than 2.0 mol, relative to 100 mol of Ti included in at least one of the side margin portions, the above-described high-temperature withstand voltage characteristic improvement effect may be insignificant. In addition, when the amount of Si in at least one of the side margin portions is greater than 5.0 mol, relative to 100 mol of Ti included in at least one of the side margin portions, a problem such as deterioration in sinterability and density of the side margin portion, formation of a secondary phase, or the like may occur.

In an embodiment, at least one of the side margin portions 141 and 142 may contain Al, and an amount of Al in at least one of the side margin portions may be 0.6 mol or less, relative to 100 mol of Ti included in at least one of the side margin portions. The Al may exist as an oxide or a carbonate of glass or Al in the side margin portions 141 and 142, but the present disclosure is not limited thereto. The Al may serve to improve high-temperature withstand voltage characteristics of the multilayer electronic component, and may also serve to improve reliability by acting as an acceptor to reduce an electron concentration.

When the amount of Al in at least one of the side margin portions exceeds 0.6 mol, relative to 100 mol of Ti included in at least one of the side margin portions, a problem such as deterioration in sinterability and density of the side margin portion, formation of a secondary phase, or the like may occur. A lower limit of the amount of Al in at least one of the side margin portions does not need to be particularly limited, and may be, for example, greater than 0 mol.

In an embodiment, at least one of the side margin portions 141 and 142 may contain Mg, and an amount of Mg in at least one of the side margin portions may be 1.0 mol or less, relative to 100 mol of Ti included in at least one of the side margin portions. The Mg may exist as an oxide or a carbonate of Mg in the side margin portions 141 and 142, but the present disclosure is not limited thereto. The Mg may be a valence-fixed acceptor element and may improve reliability of the multilayer electronic component due to n-type formation by acting as a valence-fixed acceptor to reduce an electron concentration.

When the amount of Mg in at least one of the side margin portions is greater than 1.0 mol, relative to 100 mol of Ti included in at least one of the side margin portions, a problem in that a breakdown voltage (BDV) is lowered may occur. A lower limit of the amount of Mg in at least one of the side margin portions does not need to be particularly limited, and may be, for example, greater than 0 mol.

An example of a method of measuring an amount of each element in the dielectric layer 111 and an amount of the side margin portions 141 and 142 will be described. In a non-destructive method, components in dielectric grains of a dielectric layer 111 and side margin portions 141 and 142 may be analyzed using transmission electron microscope-energy dispersive X-ray spectroscopy (TEM-EDS). For example, thinly sliced analysis samples may be prepared using a focused ion beam (FIB) device, in a plane of a multilayer electronic component in the first and third directions, cut at a center in the second direction. Then, a damaged layer on a surface of the thinly sliced sample may be removed using Ar ion milling, and then mapping and quantitative analysis of each component may be performed in an image acquired using TEM-EDS or STEM-EDX. In this case, a graph for the quantitative analysis of each component may be obtained from a mass fraction of each element, and may also be expressed by converting the same into a molar fraction thereof. In addition, in a destructive method, a multilayer electronic component may be disassembled, internal electrodes may be removed, side margin portions and dielectric layers may be selected, and components of the side margin portions and dielectric layers, thus selected, may be analyzed using an apparatus such as a inductively coupled plasma spectrometry (ICP-OES), inductively coupled plasma mass spectrometer (ICP-MS), or the like. However, the present disclosure is not limited thereto, and an amount of each element in the dielectric layer 111 and the side margin portions 141 and 142 may be measured by various analysis methods such as X-ray fluorescence spectrometry (XRF) or the like. Other methods and/or tools appreciated by one of ordinary skill in the art, even if not described in the present disclosure, may also be used.

In an embodiment, an average thickness of the side margin portions 141 and 142 may be 2 µm to 10 µm. When the average thickness of the side margin portions 141 and 142 is less than 2 µm, reliability of the multilayer electronic component may be deteriorated, and when the average thickness of the side margin portions 141 and 142 exceeds 10 µm, capacitance per unit volume of the multilayer electronic component may be lowered.

In this case, the average thickness of the side margin portions 141 and 142 may mean an average thickness of the first side margin portion 141 and an average thickness of the second side margin portion 142, respectively. In addition, the average thickness of the side margin portions 141 and 142 may mean an average size of the side margin portions 141 and 142 in the third direction, and may be an average size in the first direction, measured at five equally spaced points in a plane of the multilayer electronic component in the first and third directions

The external electrodes 131 and 132 may be disposed on the third and fourth surfaces 3 and 4 of the body 110, and may extend onto portions of the first, second, fifth and sixth surfaces. In addition, the external electrodes 131 and 132 may include a first external electrode 131 connected to the plurality of first internal electrodes 121, and a second external electrode 132 connected to the plurality of second internal electrodes 122.

The external electrodes 131 and 132 may be formed by dipping the third and fourth surfaces 3 and 4 of the body 110 in a conductive paste for external electrodes containing a conductive metal and glass, and then sintering them, and may be formed by transferring a sheet including a conductive metal and glass.

The conductive metal included in the external electrodes 131 and 132 may be copper (Cu), nickel (Ni), palladium (Pd), platinum (Pt), gold (Au), silver (Ag), lead (Pb), an alloy including the same, and/or the like, but the present disclosure is not limited thereto.

In addition, although not illustrated, a plating layer for improving mounting characteristics may be disposed on the external electrodes 131 and 132. The plating layer may be a plating layer including nickel (Ni), tin (Sn), palladium (Pd), an alloy including the same, and/or the like, or may be formed as a plurality of layers. In addition, the plating layer may be a nickel (Ni) plating layer or a tin (Sn) plating layer, or may have a configuration in which a nickel (Ni) plating layer and a tin (Sn) plating layer are sequentially formed.

In the drawings, a structure in which the multilayer electronic component 100 has two external electrodes 131 and 132 is illustrated, but is not limited thereto, and the number or shapes of the external electrodes 131 and 132 may be determined by the internal electrodes 121 and 122, or other purposes.

### (Experimental Example)

First, after preparing a body including a dielectric layer and an internal electrode, a dielectric sheet including BaTiO₃, ZnO, ZrO₂, an additive, a solvent, a dispersant, and the like was separately prepared, and the dielectric sheet was placed on fifth and sixth surfaces of the body. Thereafter, they were sintered to prepare side margin portions. After the sintering, third and fourth surfaces of the body were dipped into a conductive paste for external electrodes, containing Cu, and then sintered to form external electrodes, to prepare sample chips. Zn and Zr were not separately added to the dielectric layer of each of the sample chips.

In this case, for ten samples per each test number, an amount of Zn, relative to 100 mol of Ti included in the side margin portions, and an amount of Zr, relative to 100 mol of Ti included in the side margin portions, were measured, respectively, and an average value of amounts of Zn and an average value of amounts of Zr were illustrated in Table 1 below.

In addition, images of a central region of the side margin portions with a scanning electron microscope (SEM) at a magnification of 50,000, in a plane of the sample chips in the first and third directions, cut at a center in the second direction, were obtained, the images were analyzed using Zootos Program of Zootos to determine an average size A1 of dielectric grains included in the side margin portion, and results therefrom were then listed in Table 1 below.

In the same plane, images of a dielectric layer disposed in a central region of a capacitance forming portion Ac were obtained with a scanning electron microscope (SEM) at a magnification of 50,000, then the images were analyzed using Zootos Program of Zootos to determine an average size A2 of dielectric grains included in the dielectric layer, and results therefrom were then listed in Table 1 below.

**[Table 1]**

| Test No. | Zn Amount (mol) | Zr Amount (mol) | A1 (nm) | A1/A2 |
|---|---|---|---|---|
| 1 | 0 | 0 | 303 | 0.98 |
| 2 | 0.1 | 0.1 | 291 | 0.96 |
| 3 | 0.5 | 0.5 | 192 | 0.65 |
| 4 | 1.0 | 1.0 | 104 | 0.34 |
| 5 | 1.5 | 1.5 | 96 | 0.33 |

Referring to Table 1, it can be seen that, as an amount of Zn and an amount of Zr in the side margin portions increase, grain growth of dielectric grains of the side margin portions was suppressed to reduce A1, and accordingly, A1/A2 values also decreased.

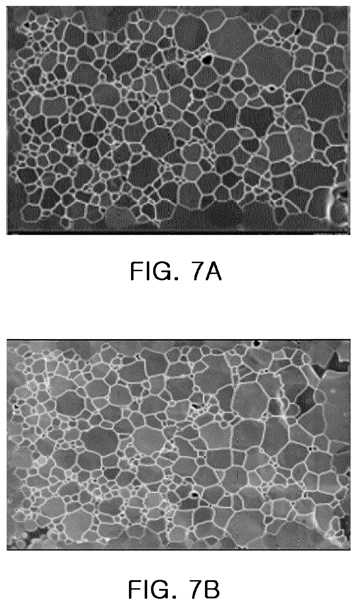

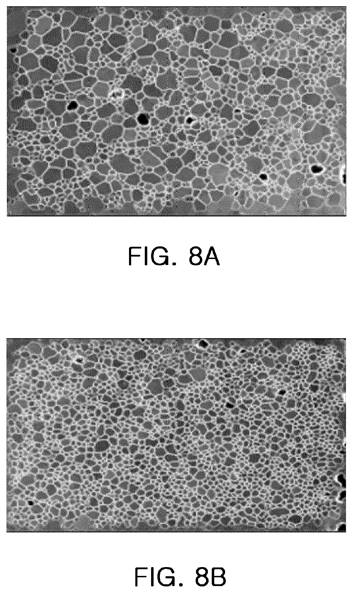

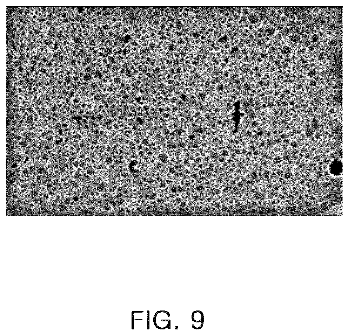

FIGS. 7A to 9 are images taken with a scanning electron microscope (SEM) of the side margin portions of each test number. More specifically, FIG. 7A is an image of a side margin portion of test number 1, FIG. 7B is an image of a side margin portion of test number 2, FIG. 8A is an image of a side margin portion of test number 3, FIG. 8B is an image of a side margin portion of test number 4, and FIG. 9 is an image of a side margin portion of test number 5, taken with a scanning electron microscope (SEM). Referring to FIGS. 7A to 9, it can be seen that, as an amount of Zn and an amount of Zr in the side margin portions increases, an average size of dielectric grains of the side margin portions decreased.

Next, dielectric loss (a dissipation factor, DF) and effective capacitance change rate at 1V DC were measured under conditions of 100 kHz, 0.01 Vrms, 1 Vdc, and measurement time of 60 seconds, and were listed in Table 2 below. In addition, high-temperature reliability evaluation and moisture resistance evaluation were performed on forty sample chips for each test number.

In the high-temperature reliability evaluation, each sample chip was mounted, a voltage of 12.6 V was applied for 50 hours at a temperature of 105 °C, and then the number of samples of which insulation resistance value fell 6 order or below was illustrated in Table 2 below.

In the moisture resistance reliability evaluation, each sample chip was mounted, a voltage of 12.6 V was applied for 24 hours at a temperature of 85 °C and a relative humidity of 85%, the number of samples of which insulation resistance value fell 1 order or more than an initial value was illustrated in Table 2 below.

**[Table 2]**

| Test No. | DF (%) | Effective Capacitance Change Rate (%) | High Temperature Reliability | Moisture Resistance Reliability |
|---|---|---|---|---|
| 1 | 5.31 | -13.7 | 3/40 | 2/40 |
| 2 | 5.26 | -12.9 | 1/40 | 0/40 |
| 3 | 4.90 | -12.4 | 0/40 | 0/40 |
| 4 | 4.89 | -12.1 | 0/40 | 0/40 |
| 5 | 4.81 | -11.9 | 1/40 | 1/40 |

Referring to Table 2, it can be seen that, as an amount of Zn and an amount of Zr in the side margin portions increase, DF and effective capacitance change rate decreased. It can be expected that density between the capacitance forming portion, the side margin portions increase, and a boundary region was improved due to Zn and Zr included in the side margin portion, and the DF and effective capacitance change rate of the sample chips were reduced.

In Test Nos. 1 and 2, samples that were defective in the high-temperature reliability evaluation and/or the moisture resistance evaluation occurred. It can be expected because the amounts of Zn and Zr included in the side margin portions were small, and an effect of improving reliability due to Zn and Zr was insignificant. In addition, it can be expected because a reason for occurrence of defective samples in the high-temperature reliability evaluation and the moisture resistance evaluation in Test No. 5 was that external moisture penetrates through pores generated by excessive suppression of grain growth, as illustrated in FIG. 9.

In Test Nos. 3 and 4, no sample that was defective in both the high-temperature reliability evaluation and the moisture resistance evaluation. Therefore, when the amount of Zn and the amount of Zr in at least one of the side margin portions were 0.5 mol or more 1.0 mol or less, relative to 100 mol of Ti included in at least one of the side margin portions, respectively, an effect of improving reliability of the multilayer electronic component was remarkable.

The present disclosure is not limited by the above-described embodiments and accompanying drawings, but is intended to be limited by the appended claims. Therefore, various forms of substitution, modification, and change will be possible by those skilled in the art within the scope of the technical spirit of the present disclosure described in the claims, and this will also be said to fall within the scope of the present disclosure.

In addition, the expression 'an embodiment' does not indicate the same embodiment, and is provided to emphasize and describe different unique characteristics. However, an embodiment presented above is not excluded from being implemented in combination with features of another embodiment. For example, even if a matter described in one detailed embodiment is not described in another embodiment, and it can be understood as a description related to another embodiment, unless there is a description contradicting or contradicting the matter in another embodiment.

In addition, expressions such as first and second are used to distinguish one component from another, and do not limit the order and/or importance of the components. In some cases, without departing from the scope of rights, a first element may be named a second element, and similarly, a second element may be named a first element.

As one of various effects of the present disclosure, reliability of a multilayer electronic component may be improved.

As one of various effects of the present disclosure, a dissipation factor (DF) and an effective capacitance change rate of a multilayer electronic component may be reduced.

While example embodiments have been illustrated and described above, it will be apparent to those skilled in the art that modifications and variations could be made without departing from the scope of the present disclosure as defined by the appended claims.

## Claims

1. A multilayer electronic component (100) comprising:
a body (110) including a dielectric layer (111) and first and second internal electrodes (121, 122) alternately disposed in a first direction with the dielectric layer (111) interposed therebetween, and having first and second surfaces (1, 2) opposing each other in the first direction, third and fourth surfaces (3, 4) opposing each other in a second direction and connected to the first and second surfaces (1, 2), and fifth and sixth surfaces (5, 6) opposing each other in a third direction and connected to the first to fourth (1, 4) surfaces;
side margin portions (141, 142) disposed on the fifth and sixth surfaces; and
external electrodes (131, 132) disposed on the third and fourth surfaces,
wherein at least one of the side margin portions (141, 142) includes BaTiO3, Zn, and Zr, an amount of Zn and an amount of Zr in the at least one of the side margin portions (141, 142) are 0.5 mol or more and 1.0 mol or less, relative to 100 mol of Ti included in the at least one of the side margin portions (141, 142), respectively, and the amount of Zn in the at least one of the side margin portions (141, 142) is more than an amount of Zn in the dielectric layer (111), and the amount of Zr in the at least one of the side margin portions (141, 142) is more than an amount of Zr in the dielectric layer (111).

2. The multilayer electronic component (100) of claim 1,
wherein the dielectric layer (111) does not include Zn or includes a smaller amount of Zn than the at least one of the side margin portions (141, 142).

3. The multilayer electronic component (100) of claim 1,
wherein the dielectric layer (111) does not include Zr or includes a smaller amount of Zr than the at least one of the side margin portions (141, 142).

4. The multilayer electronic component (100) of claim 1,
wherein the at least one of the side margin portions (141, 142) comprises a plurality of dielectric grains (111a) and a grain boundary (111b) disposed between adjacent dielectric grains (111a),
wherein, in the at least one of the side margin portions (141, 142), an amount of Zn at the grain boundary (111b) is larger than an amount of Zn in at least one of the plurality of dielectric grains (111a), and
in the at least one of the side margin portions (141, 142), an amount of Zr at the grain boundary (111b) is larger than an amount of Zr in at least one of the plurality of dielectric grains (111a).

5. The multilayer electronic component (100) of claim 1,
satisfying 104nm ≤ A1 ≤ 192nm, where Al is an average size of a dielectric grain (111a) included in the at least one of the side margin portions (141, 142).

6. The multilayer electronic component (100) of claim 1,
satisfying 0.34 ≤ A1/A2 ≤ 0.65, where Al is an average size of a dielectric grain (111a) included in the at least one of the side margin portions (141, 142), and A2 is an average size of a dielectric grain (111a) included in the dielectric layer (111).

7. The multilayer electronic component (100) of claim 1,
wherein the at least one of the side margin portions (141, 142) further includes Dy, and
wherein an amount of Dy in the at least one of the side margin portions (141, 142) is 0.5 mol or more and 2.0 mol or less, relative to 100 mol of Ti included in the at least one of the side margin portions (141, 142).

8. The multilayer electronic component (100) of claim 1,
wherein the at least one of the side margin portions (141, 142) further includes Tb, and
wherein an amount of Tb in the at least one of the side margin portions (141, 142) is 0.1 mol or more and 0.5 mol or less, relative to 100 mol of Ti included in the at least one of the side margin portions (141, 142).

9. The multilayer electronic component (100) of claim 1,
wherein the at least one of the side margin portions (141, 142) further includes Si, and
wherein an amount of Si in the at least one of the side margin portions (141, 142) is 2.0 mol or more and 5.0 mol or less, relative to 100 mol of Ti included in the at least one of the side margin portions (141, 142).

10. The multilayer electronic component (100) of claim 1,
wherein the at least one of the side margin portions (141, 142) further includes Al, and
wherein an amount of Al in the at least one of the side margin portions (141, 142) is 0.6 mol or less, relative to 100 mol of Ti included in the at least one of the side margin portions (141, 142).

11. The multilayer electronic component (100) of claim 1,
wherein the at least one of the side margin portions (141, 142) further includes Mg, and
wherein an amount of Mg in the at least one of the side margin portions (141, 142) is 1.0 mol or less, relative to 100 mol of Ti included in the at least one of the side margin portions (141, 142).

## Patentansprüche

1. Mehrschichtiges elektronisches Bauteil (100), umfassend:
einen Körper (110), der eine dielektrische Schicht (111) und erste und zweite Innenelektroden (121, 122) umfasst, die in einer ersten Richtung abwechselnd angeordnet sind, wobei die dielektrische Schicht (111) dazwischen angeordnet ist, und der erste und zweite Oberflächen (1, 2), die in der ersten Richtung einander gegenüberliegen, dritte und vierte Oberflächen (3, 4), die in einer zweiten Richtung einander gegenüberliegen und mit den ersten und zweiten Oberflächen (1, 2) verbunden sind, und fünfte und sechste Oberflächen (5, 6), die in einer dritten Richtung einander gegenüberliegen und mit den ersten bis vierten (1, 4) Oberflächen verbunden sind, aufweist;
Seitenrandabschnitte (141, 142), die auf den fünften und sechsten Oberflächen angeordnet sind; und
Außenelektroden (131, 132), die auf den dritten und vierten Oberflächen angeordnet sind,
wobei wenigstens einer der Seitenrandabschnitte (141, 142) BaTiO3, Zn und Zr umfasst,
eine Menge an Zn und eine Menge an Zr in dem wenigstens einen der Seitenrandabschnitte (141, 142) jeweils 0,5 Mol oder mehr und 1,0 Mol oder weniger, bezogen auf 100 Mol Ti, das in dem wenigstens einen der Seitenrandabschnitte (141, 142) enthalten ist, betragen, und die Menge an Zn in dem wenigstens einen der Seitenrandabschnitte (141, 142) größer ist als eine Menge an Zn in der dielektrischen Schicht (111), und die Menge an Zr in dem wenigstens einen der Seitenrandabschnitte (141, 142) größer ist als eine Menge an Zr in der dielektrischen Schicht (111).

2. Mehrschichtiges elektronisches Bauteil (100) nach Anspruch 1,
wobei die dielektrische Schicht (111) kein Zn umfasst oder eine geringere Menge an Zn umfasst als der wenigstens eine der Seitenrandabschnitte (141, 142).

3. Mehrschichtiges elektronisches Bauteil (100) nach Anspruch 1,
wobei die dielektrische Schicht (111) kein Zr umfasst oder eine geringere Menge an Zr umfasst als der wenigstens eine der Seitenrandabschnitte (141, 142).

4. Mehrschichtiges elektronisches Bauteil (100) nach Anspruch 1,
wobei der wenigstens eine der Seitenrandabschnitte (141, 142) eine Vielzahl von dielektrischen Körnern (111a) und eine Korngrenze (111b), die zwischen benachbarten dielektrischen Körnern (111a) angeordnet ist, umfasst,
wobei in dem wenigstens einen der Seitenrandabschnitte (141, 142) eine Menge an Zn an der Korngrenze (111b) größer ist als eine Menge an Zn in wenigstens einem der Vielzahl von dielektrischen Körnern (111a), und
in dem wenigstens einen der Seitenrandabschnitte (141, 142) eine Menge an Zr an der Korngrenze (111b) größer ist als eine Menge an Zr in wenigstens einem der Vielzahl von dielektrischen Körnern (111a).

5. Mehrschichtiges elektronisches Bauteil (100) nach Anspruch 1,
wobei 104nm ≤ A1 ≤ 192nm erfüllt ist, wobei A1 eine mittlere Größe eines dielektrischen Korns (111a) ist, das in dem wenigstens einen der Seitenrandabschnitte (141, 142) enthalten ist.

6. Mehrschichtiges elektronisches Bauteil (100) nach Anspruch 1,
wobei 0,34 ≤ A1/A2 ≤ 0,65 erfüllt ist, wobei A1 eine mittlere Größe eines dielektrischen Korns (111a) ist, das in dem wenigstens einen der Seitenrandabschnitte (141, 142) enthalten ist, und A2 eine mittlere Größe eines dielektrischen Korns (111a) ist, das in der dielektrischen Schicht (111) enthalten ist.

7. Mehrschichtiges elektronisches Bauteil (100) nach Anspruch 1,
wobei der wenigstens eine der Seitenrandabschnitte (141, 142) ferner Dy umfasst, und wobei eine Menge an Dy in dem wenigstens einen der Seitenrandabschnitte (141, 142) 0,5 Mol oder mehr und 2,0 Mol oder weniger, bezogen auf 100 Mol Ti, das in dem wenigstens einen der Seitenrandabschnitte (141, 142) enthalten ist, beträgt.

8. Mehrschichtiges elektronisches Bauteil (100) nach Anspruch 1,
wobei der wenigstens eine der Seitenrandabschnitte (141, 142) ferner Tb umfasst, und
wobei eine Menge an Tb in dem wenigstens einen der Seitenrandabschnitte (141, 142) 0,1 Mol oder mehr und 0,5 Mol oder weniger, bezogen auf 100 Mol Ti, das in dem wenigstens einen der Seitenrandabschnitte (141, 142) enthalten ist, beträgt.

9. Mehrschichtiges elektronisches Bauteil (100) nach Anspruch 1,
wobei der wenigstens eine der Seitenrandabschnitte (141, 142) ferner Si umfasst, und
wobei eine Menge an Si in dem wenigstens einen der Seitenrandabschnitte (141, 142) 2,0 Mol oder mehr und 5,0 Mol oder weniger, bezogen auf 100 Mol Ti, das in dem wenigstens einen der Seitenrandabschnitte (141, 142) enthalten ist, beträgt.

10. Mehrschichtiges elektronisches Bauteil (100) nach Anspruch 1,
wobei der wenigstens eine der Seitenrandabschnitte (141, 142) ferner Al umfasst, und
wobei eine Menge an Al in dem wenigstens einen der Seitenrandabschnitte (141, 142) 0,6 Mol oder weniger, bezogen auf 100 Mol Ti, das in dem wenigstens einen der Seitenrandabschnitte (141, 142) enthalten ist, beträgt.

11. Mehrschichtiges elektronisches Bauteil (100) nach Anspruch 1,
wobei der wenigstens eine der Seitenrandabschnitte (141, 142) ferner Mg umfasst, und
wobei eine Menge an Mg in dem wenigstens einen der Seitenrandabschnitte (141, 142) 1,0 Mol oder weniger, bezogen auf 100 Mol Ti, das in dem wenigstens einen der Seitenrandabschnitte (141, 142) enthalten ist, beträgt.

## Revendications

1. Composant électronique multicouche (100), comprenant :
un corps (110) comprenant une couche diélectrique (111) et des première et deuxième électrodes internes (121, 122) disposées en alternance dans une première direction avec la couche diélectrique (111) interposée entre elles, et ayant des première et deuxième surfaces (1, 2) opposées l'une à l'autre dans la première direction, des troisième et quatrième surfaces (3, 4) opposées l'une à l'autre dans une deuxième direction et reliées aux première et deuxième surfaces (1, 2), et des cinquième et sixième surfaces (5, 6) opposées l'une à l'autre dans une troisième direction et reliées aux première à quatrième (1, 4) surfaces ;
des parties de marge latérale (141, 142) disposées sur les cinquième et sixième surfaces ; et
des électrodes externes (131, 132) disposées sur les troisième et quatrième surfaces,
dans lequel au moins l'une des parties de marge latérale (141, 142) comprend du BaTiO3, du Zn et du Zr,
une quantité de Zn et une quantité de Zr dans ladite au moins une des parties de marge latérale (141, 142) sont respectivement de 0,5 mole ou plus et de 1,0 mole ou moins, par rapport à 100 moles de Ti comprises dans ladite au moins une des parties de marge latérale (141, 142), et la quantité de Zn dans ladite au moins une des parties de marge latérale (141, 142) est supérieure à une quantité de Zn dans la couche diélectrique (111), et la quantité de Zr dans ladite au moins une des parties de marge latérale (141, 142) est supérieure à une quantité de Zr dans la couche diélectrique (111).

2. Composant électronique multicouche (100) selon la revendication 1,
dans lequel la couche diélectrique (111) ne comprend pas de Zn ou comprend une quantité de Zn inférieure à celle de ladite au moins une des parties de marge latérale (141, 142).

3. Composant électronique multicouche (100) selon la revendication 1,
dans lequel la couche diélectrique (111) ne comprend pas de Zr ou comprend une quantité de Zr inférieure à celle de ladite au moins une des parties de marge latérale (141, 142).

4. Composant électronique multicouche (100) selon la revendication 1,
dans lequel ladite au moins une des parties de marge latérale (141, 142) comprend une pluralité de grains diélectriques (111a) et un joint de grain (111b) disposé entre des grains diélectriques adjacents (111a),
dans lequel, dans ladite au moins une des parties de marge latérale (141, 142), une quantité de Zn au niveau du joint de grain (111b) est supérieure à une quantité de Zn dans au moins l'un de la pluralité de grains diélectriques (111a), et
dans ladite au moins une des parties de marge latérale (141, 142), une quantité de Zr au niveau du joint de grain (111b) est supérieure à une quantité de Zr dans au moins l'un de la pluralité de grains diélectriques (111a).

5. Composant électronique multicouche (100) selon la revendication 1,
satisfaisant à 104nm ≤ A1 ≤ 192nm, où A1 est une taille moyenne d'un grain diélectrique (111a) compris dans ladite au moins une des parties de marge latérale (141, 142).

6. Composant électronique multicouche (100) selon la revendication 1,
satisfaisant à 0,34 ≤ A1/A2 ≤ 0,65, où A1 est une taille moyenne d'un grain diélectrique (111a) compris dans ladite au moins une des parties de marge latérale (141, 142), et A2 est une taille moyenne d'un grain diélectrique (111a) compris dans la couche diélectrique (111).

7. Composant électronique multicouche (100) selon la revendication 1,
dans lequel ladite au moins une des parties de marge latérale (141, 142) comprend en outre du Dy, et
dans lequel une quantité de Dy dans ladite au moins une des parties de marge latérale (141, 142) est de 0,5 mole ou plus et de 2,0 moles ou moins, par rapport à 100 moles de Ti comprises dans ladite au moins une des parties de marge latérale (141, 142).

8. Composant électronique multicouche (100) selon la revendication 1,
dans lequel ladite au moins une des parties de marge latérale (141, 142) comprend en outre du Tb, et
dans lequel une quantité de Tb dans ladite au moins une des parties de marge latérale (141, 142) est de 0,1 mole ou plus et de 0,5 mole ou moins, par rapport à 100 moles de Ti comprises dans ladite au moins une des parties de marge latérale (141, 142).

9. Composant électronique multicouche (100) selon la revendication 1,
dans lequel ladite au moins une des parties de marge latérale (141, 142) comprend en outre du Si, et
dans lequel une quantité de Si dans ladite au moins une des parties de marge latérale (141, 142) est de 2,0 moles ou plus et de 5,0 moles ou moins, par rapport à 100 moles de Ti comprises dans ladite au moins une des parties de marge latérale (141, 142).

10. Composant électronique multicouche (100) selon la revendication 1,
dans lequel ladite au moins une des parties de marge latérale (141, 142) comprend en outre de l'Al, et
dans lequel une quantité d'Al dans ladite au moins une des parties de marge latérale (141, 142) est de 0,6 mole ou moins, par rapport à 100 moles de Ti comprises dans ladite au moins une des parties de marge latérale (141, 142).

11. Composant électronique multicouche (100) selon la revendication 1,
dans lequel ladite au moins une des parties de marge latérale (141, 142) comprend en outre du Mg, et
dans lequel une quantité de Mg dans ladite au moins une des parties de marge latérale (141, 142) est de 1,0 mole ou moins, par rapport à 100 moles de Ti comprises dans ladite au moins une des parties de marge latérale (141, 142).
